# EUROPÄISCHE PATENTSCHRIFT

(11) **EP 3 221 261 B1**
(45) Veröffentlichungstag und Bekanntmachung des Hinweises auf die Patenterteilung: **09.10.2019**
(21) Anmeldenummer: 15795138.5
(22) Anmeldetag: 10.11.2015
(51) Int. Cl.: C01B 21/26, C01B 21/28, F23C 99/00

(54) **BRENNERKORB FÜR EINEN AMMONIAK-OXIDATIONSBRENNER**
BURNER BASKET FOR AN AMMONIA OXIDATION BURNER
PANIER DE BRÛLEUR POUR BRÛLEUR À OXYDATION D'AMMONIAC

(30) Priorität: 21.11.2014 DE 102014223813
(43) Veröffentlichungstag der Anmeldung: 27.09.2017
(73) Patentinhaber: thyssenkrupp Industrial Solutions AG, 45143 Essen (DE); thyssenkrupp AG, 45143 Essen (DE)
(72) Erfinder: FUCHS, Jürgen, 44139 Dortmund (DE); RUTHARDT, Klaus, 44265 Dortmund (DE)
(74) Vertreter: thyssenkrupp Intellectual Property GmbH
(86) Internationale Anmeldenummer: PCT/EP2015/076249
(87) Internationale Veröffentlichungsnummer: WO 2016/078975

(56) Entgegenhaltungen:
- WO-A1-91/08982
- WO-A1-2013/034303

## Beschreibung

### Stand der Technik

Die vorliegende Erfindung betrifft einen Brennerkorb für einen Ammoniak-Oxidationsbrenner mit einer gasdurchlässigen Bodenplatte, mit einer von der Bodenplatte durch einen Spalt beabstandeten Seitenwand, und mit einer die Bodenplatte und den Spalt abdeckenden Rückhalteeinrichtung zum Rückhalten von in dem Brennerkorb anordbaren Partikeln einer Schüttung.

Ammoniak-Oxidationsbrenner werden bei der Synthese von Salpetersäure verwendet. Hierbei werden in dem Ammoniak-Oxidationsbrenner Ammoniak (NH₃) und Sauerstoff (O₂) katalytisch zu Stickstoffmonoxid (NO) und Wasser (H₂O) umgesetzt. Das erhaltene NO wird dann zur Salpetersäureherstellung weiterverwendet.

Als Katalysatoren werden in Ammoniak-Oxidationsbrennern üblicherweise Platin/Rhodium-Netze eingesetzt, welche auf einer aus Partikeln bestehenden Schüttung platziert werden. Die Partikel sind in der Regel als Füllkörper aus Steinzeug, Glas, Porzellan oder Edelstahl ausgebildet und in einen innerhalb des Brenners angeordneten Brennerkorb eingebracht. Der Brennerkorb weist üblicherweise eine mit Öffnungen versehene, gasdurchlässige Bodenplatte auf, so dass das in den Brenner eingeleitete NH₃ durch den Brennerkorb und die Schüttung strömen kann.

Die Oxidation von Ammoniak in dem Brenner erfordert eine Betriebstemperatur von ca. 890 °C bei einem Druck von ca. 10 bar. Aufgrund der hohen Temperatur dehnt sich der Brennerkorb bei Betrieb des Ammoniak-Oxidationsbrenners aus. Um mechanische Spannungen im Material des Brennerkorbs zu reduzieren, sind die Bodenplatte und die Seitenwand oftmals als separate Bauteile ausgebildet, welche jeweils unabhängig voneinander im Inneren des Ammoniak-Oxidationsbrenners angeordnet werden. Zwischen der Bodenplatte und der Seitenwand bildet sich insofern ein Spalt.

Ein derartiger Brennerkorb mit einer Bodenplatte und einer Seitenwand, die durch einen Spalt voneinander getrennt sind, wird in der WO 2013 034 303 A1 beschrieben. Um zu vermeiden, dass Partikel der Schüttung durch die Öffnungen der gasdurchlässigen Bodenplatte oder durch den Spalt zwischen Bodenplatte und Seitenwand aus dem Brennerkorb fallen, ist bei diesem Brennerkorb eine Rückhalteeinrichtung in Form eines gasdurchlässigen Netzes vorgesehen, welche den Spalt und die Bodenplatte abdeckt. Allerdings besteht bei diesem Brennerkorb die Gefahr, dass sich das Netz infolge der Bewegungen der Bodenplatte gegenüber der Seitenwand von der Bodenplatte lösen und den Spalt oder die Öffnungen der Bodenplatte freigeben kann, so dass Schüttgut aus dem Brennerkorb fallen kann.

### Offenbarung der Erfindung

Die Aufgabe der vorliegenden Erfindung ist es, Verluste von im Brennerkorb befindlichen Partikeln der Schüttung zu verhindern.

Die Aufgabe wird gelöst durch einen Brennerkorb für einen Ammoniak-Oxidationsbrenner mit einer gasdurchlässigen Bodenplatte, mit einer von der Bodenplatte durch einen Spalt beabstandeten Seitenwand, und mit einer die Bodenplatte und den Spalt abdeckenden Rückhalteeinrichtung zum Rückhalten von in dem Brennerkorb anordbaren Partikeln einer Schüttung, wobei die Rückhalteeinrichtung als gasdurchlässiges Gewebe ausgebildet ist, und wobei an der Bodenplatte ein oder mehrere Befestigungselemente angeordnet sind, über welche die Rückhalteeinrichtung festgelegt ist.

Gelöst wird die Aufgabe ferner durch einen Ammoniak-Oxidationsbrenner mit einem derartigen Brennerkorb.

Durch das Befestigungselement oder die Befestigungselemente wird die Rückhalteeinrichtung an der Bodenplatte festgelegt, so dass sich die Rückhalteeinrichtung zusammen mit der Bodenplatte gegenüber der Seitenwand bewegen kann. Ein Lösen der Rückhalteeinrichtung von der Bodenplatte aufgrund von Bewegungen der Bodenplatte gegenüber der Seitenwand kann verhindert werden. Die gasdurchlässige Bodenplatte und der Spalt zwischen der Bodenplatte und der Seitenwand bleiben daher auch bei Bewegungen der Bodenplatte gegenüber der Seitenwand durch die Rückhalteeinrichtung abgedeckt, so dass Verluste von im Brennerkorb vorhandenen Partikeln verhindert werden können.

Die Rückhalteeinrichtung ist als gasdurchlässiges Gewebe, insbesondere als gasdurchlässiges Netz, ausgebildet. Besonders bevorzugt, weist die Rückhalteeinrichtung Maschen auf, deren Maschenbreite kleiner ist als die Größe der Partikel der Schüttung, so dass die Partikel der Schüttung durch die Rückhalteeinrichtung zurückgehalten werden können während jedoch Gas durch die Rückhalteeinrichtung strömen kann.

Eine vorteilhafte Ausgestaltung der Erfindung sieht vor, dass das Befestigungselement oder die Befestigungselemente in einem dem Spalt zugewandten Randbereich der Bodenplatte angeordnet sind, wodurch die Wahrscheinlichkeit einer zumindest teilweisen Freigabe des Spalts infolge eines Verrutschens der Rückhalteeinrichtung verringert werden kann.

Als vorteilhaft hat es sich herausgestellt, wenn das Befestigungselement oder die Befestigungselemente zumindest einen Stift aufweisen, welcher quer zu der Bodenplatte, insbesondere senkrecht zu der Bodenplatte angeordnet ist. Die Rückhalteeinrichtung kann an dem Stift verhakt werden. Im Falle einer als Netz ausgebildeten Rückhalteinrichtung kann diese auf den Stift aufgesteckt werden, so dass der Stift die Rückhalteeinrichtung festlegt. Alternativ oder zusätzlich können das Befestigungselement oder die Befestigungselemente einen Widerhaken aufweisen. Der Widerhaken kann sich in der Rückhalteeinrichtung verhaken und damit eine nur schwer zu lösende Festlegung der Rückhalteeinrichtung an der Bodenplatte bewirken.

Bevorzugt ist eine Ausgestaltung, bei welcher mit der Bodenplatte eine Dichteinrichtung verbunden ist, welche den Spalt zumindest teilweise abdeckt. Die Dichteinrichtung verkleinert insofern den Spalt auf eine Restspaltgröße, so dass Partikel, die größer als die Restspaltgröße sind, nicht aus dem Brennerkorb fallen können. Besonders bevorzugt deckt die Dichteinrichtung den Spalt derart ab, dass der Spalt auf eine Größe von maximal 10 mm verkleinert wird. Die Dichteinrichtung kann starr mit der Bodenplatte verbunden sein. Es ist möglich, die Dichteinrichtung aus einem elastischen Material auszubilden, so dass sich die Dichteinrichtung beim Kontakt mit der Seitenwand verformen kann. Ferner kann die Dichteinrichtung bewegbar mit der Bodenplatte verbunden sein, so dass sich die Lage der Dichteinrichtung an die Größe des Spalts zwischen der Bodenplatte und der Seitenwand anpassen kann.

Eine konstruktive Ausgestaltung sieht vor, dass die Dichteinrichtung mit der Rückhalteeinrichtung starr verbunden ist, so dass die Rückhalteeinrichtung gegenüber der Dichteinrichtung festgelegt ist. Alternativ kann die Dichteinrichtung mit der Rückhalteeinrichtung beweglich gekoppelt sein oder unabhängig voneinander im Brennerkorb angeordnet sein.

Vorteilhaft ist es, wenn die Dichteinrichtung einen rechteckigen oder einen trapezförmigen Querschnitt aufweist. Aufgrund des rechteckigen oder trapezförmigen Querschnitts kann die Dichteinrichtung plan an einer quer, insbesondere rechtwinklig, zu der Bodenplatte orientierten Seitenwand anliegen oder gegenüber einer solchen Seitenwand einen Spalt von gleichmäßiger Größe bilden.

Die Bodenplatte des Brennerkorbs ist bevorzugt als Wabenrost, Netzboden, Siebboden, Gitterboden oder Lochblech ausgebildet, so dass das in den Ammoniak-Oxidationsbrenner eingeleitete Gas durch die Bodenplatte strömen kann.

In konstruktiver Ausgestaltung kann vorgesehen sein, dass die Bodenplatte einen U-förmigen, V-förmigen oder trapezförmigen Querschnitt aufweist.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

### Kurze Beschreibung der Figuren

Die **Fig. 1** zeigt ein erstes Ausführungsbeispiel eines erfindungsgemäßen Brennerkorbs in einer seitlichen Schnittdarstellung.
Die **Fig. 2** zeigt den Brennerkorb gemäß Fig. 1 teilweise mit Partikeln einer Schüttung gefüllt.
Die **Fig. 3** zeigt ein zweites Ausführungsbeispiel eines erfindungsgemäßen Brennerkorbs in einer seitlichen Schnittdarstellung.
Die **Fig. 4** zeigt ein drittes Ausführungsbeispiel eines erfindungsgemäßen Brennerkorbs in einer seitlichen Schnittdarstellung.
Die **Fig. 5** zeigt ein viertes Ausführungsbeispiel eines erfindungsgemäßen Brennerkorbs in einer seitlichen Schnittdarstellung.
Die **Fig. 6** zeigt ein fünftes Ausführungsbeispiel eines erfindungsgemäßen Brennerkorbs in einer seitlichen Schnittdarstellung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

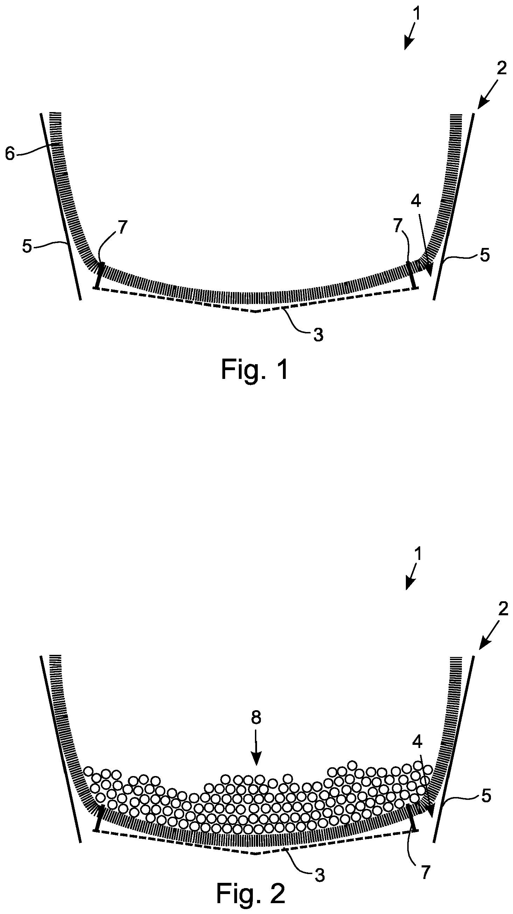

In der **Fig.** 1 ist ein in einem Brennerkorb 2 dargestellt, welcher in einem Ammoniak-Oxidationsbrenner angeordnet wird, um Ammoniak und Sauerstoff katalytisch zu Stickstoffmonoxid und Wasser umzusetzen. Der Brennerkorb 2 weist eine im Wesentlichen kegelförmige Form auf und ist bei Betrieb des Ammoniak-Oxidationsbrenners 1 im Innenraum dessen angeordnet, so dass er von Ammoniak und Sauerstoff durchströmt werden kann. Der Brennerkorb 2 ist aus einer gasdurchlässigen Bodenplatte 3 und einer umlaufenden Seitenwand 5 gebildet. Die Bodenplatte 3 weist Öffnungen auf und kann beispielsweise als Wabenrost, Netzboden, Siebboden, Gitterboden oder Lochblech ausgebildet sein. Gemäß diesem Ausführungsbeispiel weist die Bodenplatte 3 einen V-förmigen Querschnitt auf. Die gasdurchlässige Bodenplatte 3 und die Seitenwand 5 sind unabhängig voneinander in dem Ammoniak-Oxidationsbrenner 1 befestigt und nicht unmittelbar miteinander verbunden. Insofern besteht ein Spalt 4 zwischen der gasdurchlässigen Bodenplatte 3 und der Seitenwand 5. Oberhalb der Bodenplatte 3 ist in dem Brennerkorb 2 eine als gasdurchlässiges Netz ausgebildete Rückhalteeinrichtung 6 angeordnet, welches den Durchtritt von Ammoniak und Sauerstoff ermöglicht. Dabei verhindert die Rückhalteeinrichtung 6 ein Durchfallen von Partikeln durch den Spalt 4 und die Öffnungen der Bodenplatte 3. Das Netz weist Maschen auf, deren Maschenbreite kleiner ist als die Größer der Partikel, die in den Brennerkorb 2 eingebracht werden sollen.

Ein der Darstellung in Fig. 1 entsprechender Brennerkorb 2, welcher mit einer aus Partikeln 8 gebildeten Schüttung gefüllt ist, ist in der Fig. 2 dargestellt. Innerhalb des Brennerkorbs 1 befindet sich eine Schüttung 8 aus Partikeln, welche als Füllkörper ausgebildet sind. Die Füllkörper sind vereinfacht als im Wesentlichen kugelförmige Partikel dargestellt, können aber abweichend von der Darstellung in Fig. 2 Partikel mit beliebiger vorgegebener Form, beispielsweise als Raschig-Ringe, Pall-Ringe, Berl-, Interlox oder Torussättel und/oder Interpackkörper ausgebildet sein. Das Material der Füllkörper ist bevorzugt Steinzeug, Porzellan, Glas oder Edelstahl. Oberhalb der Schüttung 8 kann ein in den Figuren nicht dargestelltes Katalysatornetz, beispielsweise ein Platin/Rhodium-Katalysatornetz, angeordnet werden. Optional können die Partikel ein Katalysatormaterial aufweisen, so dass die katalytische Wirkung verbessert wird.

Wie der Darstellung in den Fign. 1 und 2 ferner zu entnehmen ist, sind an der Bodenplatte 3 mehrere Befestigungselemente 7 angeordnet, über welche die Rückhalteeinrichtung 6 festgelegt ist. Über die Befestigungselemente 7 wird verhindert, dass sich die Rückhalteeinrichtung 6 aufgrund von Bewegungen der Bodenplatte 3 von der Bodenplatte 3 löst. Die gasdurchlässige Bodenplatte 3 und der Spalt 4 bleiben daher auch bei Bewegungen der Bodenplatte 3 gegenüber der Seitenwand 5 durch die Rückhalteeinrichtung 6 abgedeckt, so dass Verluste von im Brennerkorb 2 vorhandenem Schüttgut 8 verhindert werden können.

Die Befestigungselemente 7 sind in einem Randbereich der Bodenplatte 3 angeordnet, welcher dem Spalt zugewandt ist. Die Befestigungselemente 7 weisen jeweils einen Stift auf, auf welchen das Netz aufgesteckt ist. Die Stifte der Befestigungselemente 7 sind quer zu der Bodenplatte 3 ausgerichtet, so dass eine Bewegung des Netzes parallel zu der Oberfläche der Bodenplatte 3 blockiert wird.

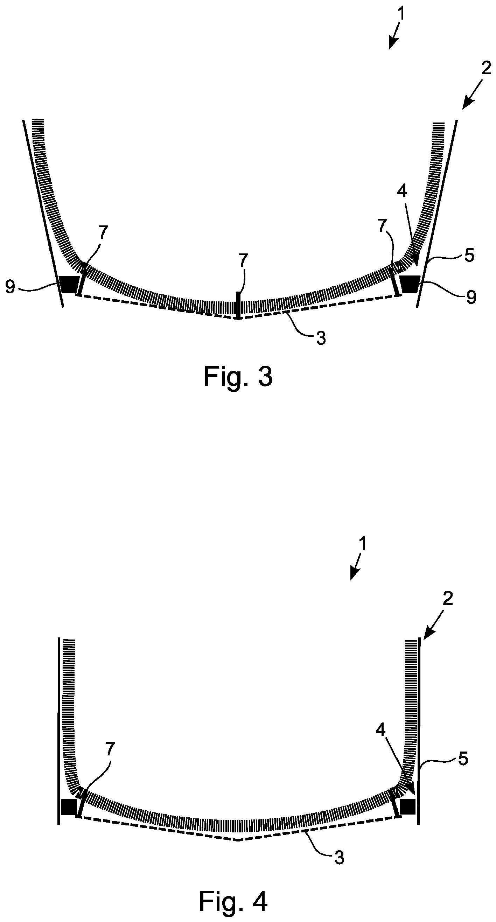

Die **Fig. 3** zeigt ein zweites Ausführungsbeispiel eines erfindungsgemäßen Brennerkorbs 2. Der Brennerkorb 2 nach Fig. 3 weist im Vergleich zu dem ersten Ausführungsbeispiel ein zusätzliches Befestigungselement 7 auf, welches im Bereich der Mitte der Bodenplatte 3 angeordnet ist. Zudem ist bei dem Brennerkorb 2 des zweiten Ausführungsbeispiels eine Dichteinrichtung 9 vorgesehen, welche den Spalt 4 zwischen der Bodenplatte 3 und der Seitenwand 2 zumindest teilweise abdeckt und somit gegenüber den Partikeln der Schüttung 8 abdichtet. Die Dichteinrichtung 9 ist starr mit der Bodenplatte 3 verbunden und aus einem elastischen Material ausgebildet, so dass sich die Dichteinrichtung 9 verformen kann sofern sie in Anlage mit der Seitenwand 2 gerät. Die Dichteinrichtung 9 läuft um den kreisbogenförmigen Rand der Bodenplatte 3 um und weist einen trapezförmigen Querschnitt auf.

In der **Fig. 4** ist ein drittes Ausführungsbeispiel eines Brennerkorbs 2 gemäß der Erfindung dargestellt. Der Brennerkorb 2 weist eine Seitenwand 2 auf, die im Wesentlichen senkrecht zu der Bodenplatte 3 orientiert angeordnet ist. Insofern ist die Gestalt des Brennerkorbs 2 im Wesentlichen zylindrisch. An der Bodenplatte 3 ist im an den Spalt angrenzenden Randbereich eine Dichteinrichtung 9 vorgesehen, welche einen quadratischen Querschnitt aufweist.

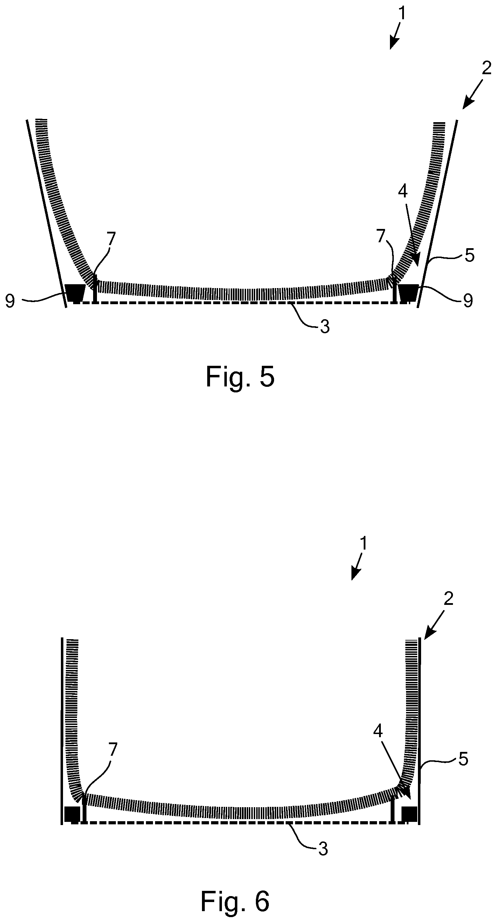

Der Darstellung in **Fig. 5** ist ein Brennerkorb 2 gemäß einem vierten Ausführungsbeispiel zu entnehmen, bei welchem eine Bodenplatte 3 vorgesehen ist, die als ebene Bodenplatte 3 ausgestaltet ist. Im Randbereich der Bodenplatte 3 sind mehrere Befestigungselemente 7 an der Bodenplatte 3 angeordnet, über welche eine als gasdurchlässiges Gewebe ausgebildete Rückhalteeinrichtung 6 festgelegt ist. Die umlaufende Seitenwand 5 des Brennerkorbs 2 weist eine im Wesentlichen konische Form auf. Insofern ist die Seitenwand 5 schräg zu der Bodenplatte 3 angeordnet. Die Seitenwand 5 schließt einen Winkel mit der Bodenplatte 3 ein, der größer als 90° ist. Ferner weist der Brennerkorb 2 eine Dichteinrichtung 9 auf, welche den Spalt 4 zwischen der Bodenplatte 3 und der Seitenwand 2 zumindest teilweise abdeckt, so dass eine gewisse Abdichtung gegenüber den Schüttungspartikeln ermöglicht werden kann. Die Dichteinrichtung 9 ist starr mit der Bodenplatte 3 verbunden und aus einem elastischen Material ausgebildet, so dass sich die Dichteinrichtung 9 verformen kann, sofern sie in Anlage mit der Seitenwand 2 gerät. Die Dichteinrichtung 9 läuft um den kreisbogenförmigen Rand der Bodenplatte 3 um und weist einen trapezförmigen Querschnitt auf.

In der **Fig. 6** ist ein fünftes Ausführungsbeispiel eines erfindungsgemäßen Brennerkorbs 2 dargestellt, welches sich von dem vierten Ausführungsbeispiel dadurch unterscheidet, dass der Brennerkorb 2 eine Seitenwand 2 aufweist, die im Wesentlichen senkrecht zu der Bodenplatte 3 orientiert angeordnet ist. Insofern ist die Gestalt des Brennerkorbs 2 im Wesentlichen zylindrisch. An der Bodenplatte 3 ist in dem an den Spalt angrenzenden Randbereich eine Dichteinrichtung 9 vorgesehen, welche einen quadratischen Querschnitt aufweist.

Die vorstehend dargestellten Brennerkörbe 2 eines Ammoniak-Oxidationsbrenners 1 weisen jeweils eine gasdurchlässige Bodenplatte 3 und eine von der Bodenplatte 3 durch einen Spalt 4 beabstandete Seitenwand 5 auf. Ferner ist bei diesen Brennerkörben 2 eine die Bodenplatte 3 und den Spalt 4 abdeckende Rückhalteeinrichtung 6 zum Rückhalten von in dem Brennerkorb 2 anordbaren Partikel einer Schüttung 8 vorgesehen, welche über ein an der Bodenplatte 3 angeordnetes Befestigungselement 7 festgelegt ist. Durch die Festlegung der Rückhalteeirichtung 6 können Verluste von im Brennerkorb 2 vorhandenen Partikeln der Schüttung 8 verhindert werden.

### Bezugszeichenliste

- 1: Ammoniak-Oxidationsbrenner
- 2: Brennerkorb
- 3: Bodenplatte
- 4: Spalt
- 5: Seitenwand
- 6: Rückhalteeinrichtung
- 7: Befestigungselement
- 8: Schüttung
- 9: Dichteinrichtung

## Patentansprüche

1. Brennerkorb für einen Ammoniak-Oxidationsbrenner (1) mit einer gasdurchlässigen Bodenplatte (3), mit einer von der Bodenplatte (3) durch einen Spalt (4) beabstandeten Seitenwand (5), und mit einer die Bodenplatte (3) und den Spalt (4) abdeckenden Rückhalteeinrichtung (6) zum Rückhalten von in dem Brennerkorb anordbaren Partikeln einer Schüttung (8), **dadurch gekennzeichnet, dass** an der Bodenplatte (3) ein oder mehrere Befestigungselemente (7) angeordnet sind, über welche die Rückhalteeinrichtung (6) festgelegt ist, und **dadurch gekennzeichnet, dass** die Rückhalteeinrichtung (6) als gasdurchlässiges Gewebe ausgebildet ist.

2. Brennerkorb nach Anspruch 1, **dadurch gekennzeichnet, dass** die Rückhalteeinrichtung (6) als gasdurchlässiges Netz ausgebildet ist.

3. Brennerkorb nach einem der vorhergehenden Ansprüche, **dadurch gekennzeichnet, dass** die Rückhalteeinrichtung (6) Maschen aufweist, deren Maschenbreite kleiner ist als die Größe der Partikel der Schüttung (8).

4. Brennerkorb nach einem der vorhergehenden Ansprüche, **dadurch gekennzeichnet, dass** ein oder mehrere Befestigungselemente (7) in einem dem Spalt (4) zugewandten Randbereich der Bodenplatte (3) angeordnet sind.

5. Brennerkorb nach einem der vorhergehenden Ansprüche, **dadurch gekennzeichnet, dass** das oder die Befestigungselemente (7) zumindest einen Stift aufweisen, welcher quer zu der Bodenplatte (3), insbesondere senkrecht zu der Bodenplatte (3), angeordnet ist.

6. Brennerkorb nach einem der vorhergehenden Ansprüche, **dadurch gekennzeichnet, dass** mit der Bodenplatte (3) eine Dichteinrichtung (9) verbunden ist, welche den Spalt (4) zumindest teilweise abdeckt.

7. Brennerkorb nach Anspruch 6, **dadurch gekennzeichnet, dass** die Dichteinrichtung (9) mit der Rückhalteeinrichtung (6) starr verbunden ist.

8. Brennerkorb nach einem der Ansprüche 6 oder 7, **dadurch gekennzeichnet, dass** die Dichteinrichtung (9) einen rechteckigen oder einen trapezförmigen Querschnitt aufweist.

9. Brennerkorb nach einem der vorhergehenden Ansprüche, **dadurch gekennzeichnet, dass** die Bodenplatte (3) als Wabenrost, Netzboden, Siebboden, Gitterboden oder Lochblech ausgebildet ist.

10. Brennerkorb nach einem der vorhergehenden Ansprüche, **dadurch gekennzeichnet, dass** die Bodenplatte (3) einen U-förmigen, V-förmigen oder trapezförmigen Querschnitt aufweist.

11. Ammoniak-Oxidationsbrenner mit einem Brennerkorb (2) nach einem der vorhergehenden Ansprüche.

## Claims

1. Burner basket for an ammonia oxidation burner (1) comprising a gas-permeable bottom plate (3), a side wall (5) that is spaced apart from the bottom plate (3) by a gap (4), and a retaining device (6) covering the bottom plate (3) and the gap (4) for retaining particles of a bulk material (8) that can be arranged in the burner basket , **characterized in that** one or more fastening elements (7) are arranged on the bottom plate (3), by means of which the retaining device (6) is fixed in place, and **characterized in that** the retaining device (6) is configured as a gas-permeable fabric.

2. Burner basket according to Claim 1, **characterized in that** the retaining device (6) is configured as a gas-permeable gauze.

3. Burner basket according to one of the previous claims, **characterized in that** the retaining device (6) has meshes with a mesh width smaller than the size of the particles of the bulk material (8).

4. Burner basket according to one of the previous claims, **characterized in that** one or more fastening elements (7) are arranged in an edge area of the bottom plate (3) facing the gap (4).

5. Burner basket according to one of the previous claims, **characterized in that** the fastening element or elements (7) have at least one pin that is arranged transversely to the bottom plate (3), in particular perpendicularly to the bottom plate (3).

6. Burner basket according to one of the previous claims, **characterized in that** a sealing device (9) is connected to the bottom plate (3), which at least partially covers the gap (4).

7. Burner basket according to Claim 6, **characterized in that** the sealing device (9) is rigidly connected to the retaining device (6).

8. Burner basket according to one of Claims 6 or 7, **characterized in that** the sealing device (9) has a rectangular or a trapezoidal cross section.

9. Burner basket according to one of the previous claims, **characterized in that** the bottom plate (3) is configured as a honeycomb grid, gauze bottom, sieve bottom, grated bottom, or perforated plate.

10. Burner basket according to one of the previous claims, **characterized in that** the bottom plate (3) has a U-shaped, V-shaped, or trapezoidal cross section.

11. Ammonia oxidation burner with a burner basket (2) according to one of the previous claims.

## Revendications

1. Panier de brûleur pour un brûleur (1) d'oxydation d'ammoniac, pourvu d'une plaque de fond (3) perméable au gaz, d'une paroi latérale (5) séparée de la plaque de fond (3) par une fente (4) et d'un dispositif de retenue (6) recouvrant la plaque de fond (3) et la fente (4) pour retenir des particules d'un matériau en vrac (8) pouvant être agencées dans le panier de brûleur, **caractérisé en ce qu'**un ou plusieurs éléments de fixation (7) sont disposés au niveau de la plaque de fond (3), via lesquels le dispositif de retenue (6) est fixé, et **caractérisé en ce que** le dispositif de retenue (6) est conçu sous forme d'un tissu perméable au gaz.

2. Panier de brûleur selon la revendication 1, **caractérisé en ce que** le dispositif de retenue (6) est conçu sous forme d'un filet perméable au gaz.

3. Panier de brûleur selon l'une quelconque des revendications précédentes, **caractérisé en ce que** le dispositif de retenue (6) présente des mailles dont la largeur de maille est inférieure à la grosseur des particules du matériau en vrac (8).

4. Panier de brûleur selon l'une quelconque des revendications précédentes, **caractérisé en ce qu'**un ou plusieurs éléments de fixation (7) sont agencés dans une zone de bord, orientée vers la fente (4), de la plaque de fond (3).

5. Panier de brûleur selon l'une quelconque des revendications précédentes, **caractérisé en ce que** le ou les éléments de fixation (7) présentent au moins une tige qui est agencée transversalement par rapport à la plaque de fond (3), en particulier perpendiculairement par rapport à la plaque de fond (3).

6. Panier de brûleur selon l'une quelconque des revendications précédentes, **caractérisé en ce qu'**un dispositif d'étanchéité (9), qui recouvre au moins partiellement la fente (4), est relié à la plaque de fond (3) .

7. Panier de brûleur selon la revendication 6, **caractérisé en ce que** le dispositif d'étanchéité (9) est relié de manière rigide au dispositif de retenue (6).

8. Panier de brûleur selon l'une quelconque des revendications 6 ou 7, **caractérisé en ce que** le dispositif d'étanchéité (9) présente une section transversale rectangulaire ou trapézoïdale.

9. Panier de brûleur selon l'une quelconque des revendications précédentes, **caractérisé en ce que** la plaque de fond (3) est conçue sous forme d'une grille à alvéoles, d'un fond de type filet, de type tamis ou de type treillis ou d'une tôle perforée.

10. Panier de brûleur selon l'une quelconque des revendications précédentes, **caractérisé en ce que** la plaque de fond (3) présente une section transversale en forme de U, de V ou trapézoïdale.

11. Brûleur d'oxydation d'ammoniac présentant un panier de brûleur (2) selon l'une quelconque des revendications précédentes.
